**Europäisches Patentamt**

**European Patent Office**

**Office européen des brevets**

(19)

(11) Numéro de publication: **0 004 513**
**B1**

(12) **FASCICULE DE BREVET EUROPEEN**

(45) Date de publication du fascicule du brevet: **05.05.82**

(51) Int. Cl.³: **B 60 K 41/22** //F16D25/14

(21) Numéro de dépôt: **79400184.2**

(22) Date de dépôt: **20.03.79**

(54) **Dispositif de commande hydropneumatique synchronisée d'embrayage et de verrouillage de boîte de vitesses.**

(30) Priorité: **23.03.78 IT 2154078**

(43) Date de publication de la demande:
**03.10.79 Bulletin 79/20**

(45) Mention de la délivrance du brevet:
**05.05.82 Bulletin 82/18**

(84) Etats contractants désignés:
**CH DE FR GB NL SE**

(56) Documents cités:
**DE - C - 945 808**
**DE - C - 1 132 004**
**DE - C - 1 157 490**
**US - A - 3 104 742**

(73) Titulaire: **BENDITALIA S.p.A.**
**Via Cavalli 53/A**
**I-26013 Crema (IT)**

(72) Inventeur: **Cadeddu, Leonardo**
**Via Piacenza 29/0**
**I-26013 Crema (IT)**

(74) Mandataire: **Brullé, Jean et al,**
**Service Brevets Bendix 44, rue François 1er**
**F-75008 Paris (FR)**

Courier Press, Leamington Spa, England.

## Dispositif de commande hydropneumatique synchronisée d'embrayage et de verrouillage de boîte de vitesses

L'invention a essentiellement pour objet un dispositif de commande hydropneumatique synchronisée d'embrayage et de verrouillage de boîte de vitesses.

On connait divers systèmes combinés pour effectuer la commande simultanée de l'embrayage d'un véhicule et du système de verrouillage/déverrouillage de sa boîte de vitesses.

Dans l'un de ces systèmes, on utilise deux maîtres cylindres hydrauliques agencés en série ou en parallèle, l'un commandant l'embrayage et l'autre le système de vérrouillage/déverrouillage de la boîte de vitesses. Le réglage d'un système de ce type est difficile à réaliser et il existe, en cas de défaillance du maître cylindre commandant l'embrayage, un risque de commander la boîte avant l'obtention du débrayage. De plus, l'effort à la pédale du véhicule est important.

On connait du brevet US. 3104742 un système mécanique à assistance pneumatique assurant séquentillement la commande de l'embrayage et du système pneumatique de vérrouillage/déverrouillage de la boîte de vitesses.

Outre la complexité du système en question, on remarque les inconvénients suivants:

— En premier lieu, la liaison mécanique entre la pédale et le dispositif d'assistance et de commande rend nécessaire de les les localiser à proximité l'un de l'autre.

— En second lieu, en cas de panne de la source d'air comprimé, l'embrayage est actionné mécaniquement, mais le système de verrouillage/déverrouillage de la boîte de vitesses ne peut être mis en oeuvre.

— Enfin, ce système ne prévoit aucun dispositif permettant d'alerter le conducteur en cas d'usure excessive des garnitures d'embrayage.

On connait par ailleurs du brevet DE. 1132.004 un dispositif assurant une mise en oeuvre séquentielle de l'embrayage et du système de verrouillage/déverrouillage de la boîte de vitesses, à partir d'un fluide unique dans lequel est prévu un dispositif ne permettant le déverrouillage que lorsque le couple auquel est soumis l'arbre de sortie de l'embrayage tombe au-dessous d'un certain seuil, soit, en d'autres termes, lorsque le débrayage a effectivement été obtenu.

On constate néanmoins que ce type de dispositif est relativement complexe en ce qu'il nécessite un dispositif particulier, en l'occurrence un frein d'arbre, pour mesurer la valeur du couple sur l'arbre de sortie de l'embrayage.

Dans le but de pallier ces inconvénients, la présente invention propose un dispositif de commande hydropneumatique synchronisée d'embrayage et de verrouillage de boîte de vitesses pour véhicule automobile, comportant un vérin hydraulique dont le piston est assisté par un moteur pneumatique et un maître-cylindre qui alimente ledit vérin en fluide hydraulique et contrôle la valve d'alimentation en air comprimé dudit moteur, caractérisé en ce que la chambre de commande dudit vérin est connectée par ailleurs au circuit hydraulique du dispositif de verrouillage/déverrouillage de la boîte de vitesses du véhicule, l'alimentation dudit circuit de boîte de vitesses étant effectuée à travers une valve montée dans le piston, qui, au repos, livre passage au fluide hydraulique dans une chambre annexe délimitée par la surface externe dudit piston, par une cloison à travers laquelle coulisse ledit piston, et par un épaulement prévu à l'extrémité libre du piston et coulissant avec étanchéité dans un alésage dudit vérin, l'admission du fluide hydraulique du maître cylindre ayant pour effet dans un premier temps de fermer ladite valve interrompant ainsi l'admission de fluide dans ladite chambre annexe, puis de provoquer le déplacement du piston sous l'action de la pression hydraulique avec déclenchement de l'assistance pneumatique ce qui provoque la réduction du volume de ladite chambre annexe et le transfert du fluide hydraulique contenu dans celle-ci vers le dispositif de verrouillage/déverrouillage de la boîte de vitesses qui se trouve déverrouillée en synchronisme avec le déplacement de la tige de commande de l'embrayage.

Selon une caractéristique complémentaire de l'invention, le dispositif de commande peut également être doté d'un dispositif d'avertissement permettant d'indiquer au conducteur que les garnitures de l'embrayage sont usées. Dans un tel dispositif, connu en soi, on réalise un étranglement de l'orifice d'arrivée du fluide en provenance du maître-cylindre lorsque le vérin du dispositif de commande accuse un recul correspondant à l'usure maximum des garnitures. Il en résulte une augmentation notable de l'effort à fournir à la pédale lorsque cette situation se produit.

L'invention sera mieux comprise à la lecture de la description qui va suivre et se réfère aux dessins annexés dans lesquels:

— la figure 1 représente en coupe longitudinale un ensemble de servo-moteur hydraulique à assistance pneumatique associé à son circuit représenté schématiquement;

— et la figure 2 montre un servo-moteur hydraulique à assistance pneumatique du type de celui de la figure 1 comportant les perfectionnements de l'invention.

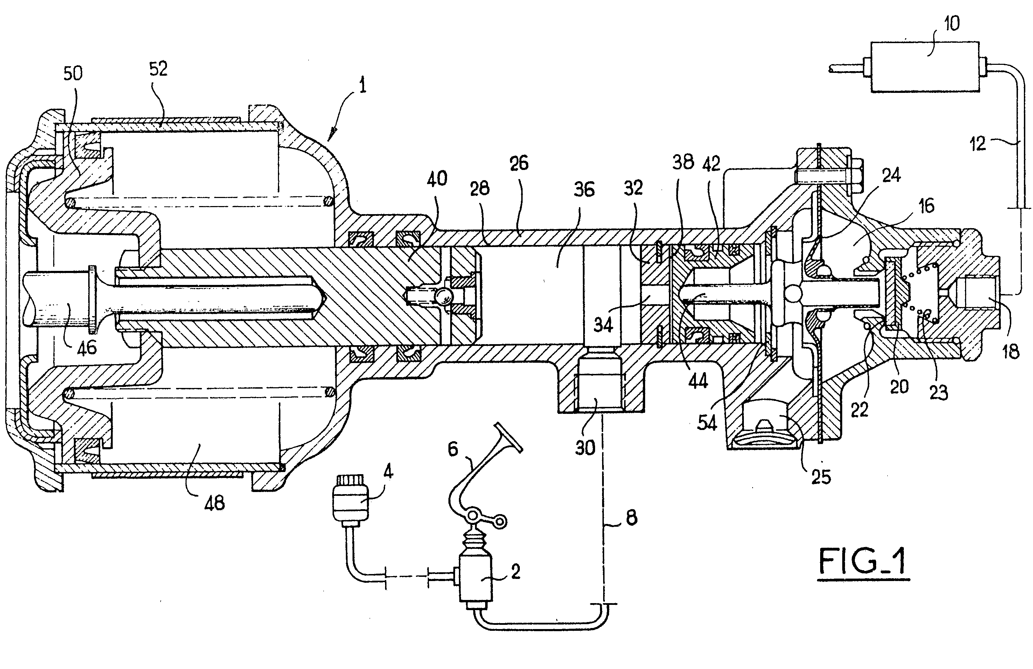

A la partie inférieure de la figure 1, on a montré schématiquement le circuit hydraulique de commande d'un servo-moteur hydropneumatique désigné par la référence générale 1. Ce circuit comporte un maître-cylindre 2 alimenté par un réservoir de fluide hydraulique 4 et contrôlé par une pédale 6. Une conduit 8 relie le maître-cylindre au servo-moteur 1. Un réservoir d'air comprimé 10 est raccordé par une conduite 12 au servo-moteur.

Le servo-moteur hydraulique à assistance pneumatique 1 est d'un type classique, il comprend une chambre d'alimentation pneumatique 16 reliée par un orifice 18 à la source d'air comprimé 10. A l'entrée de cette chambre 16 est prévue une valve d'alimentation en air comprimé 20 maintenue en position de repos contre son siège 22 par l'action d'un ressort 23. La chambre 16 est fermée par une membrane 24 dont l'autre face est reliée à l'atmosphère par un conduit 25. Le servomoteur 1 comporte un boîtier 26 dont l'alésage 28 est relié par un orifice 30 avec la source de pression hydraulique constituée par le conduit hydraulique 8 et le maître-cylindre 2. Une butée 32 en forme de douille, immobilisée en position axiale dans l'alésage 28, avec une ouverture axiale 34, partage l'alésage en deux chambre 36 et 38 de commande comprenant respectivement dans l'alésage 28 un piston 40 et un piston 42.

Le piston 42 est associé à un poussoir 44, ce dernier engageant la tige du clapet de la valve d'alimentation 20, cette tige étant montée coulissante à travers la membrane 24. L'espace compris entre le piston 42 et la membrane 24 communique avec l'air ambiant par l'orifice 25 comme on l'a vu plus haut.

Le piston 40, monté coulissant dans la chambre 36, engage la tige de sortie 46 du dispositif de commande, elle-même reliée au levier de commande de l'embrayage (non représenté). L'extrêmité du piston 40 reliée à la tige de sortie 46 fait saillie dans une troisième partie du servomoteur 1.

La troisième partie est constituée par la chambre de travail de l'assistance pneumatique 48 à volume variable, alimentée en air comprimé, par l'intermédiaire d'un conduit non représenté, provenant de la chambre d'alimentation 16. De façon classique, cette chambre de travail comprend une paroi mobile 50 qui peut coulisser dans un boîtier cylindrique 52, et qui entraîne dans son mouvement le piston 40, et par suite la tige de sortie 46 pour manoeuvrer le levier de commande de l'embrayage.

Le servomoteur hydraulique à assistance pneumatique fonctionne de la manière suivante: lorsqu'on enfonce la pédale d'embrayage 6, la pression hydraulique qui règne dans le maître-cylindre 2 déplace les pistons 40 et 42 en sens inverse l'un de l'autre. Le piston 42 écarte le clapet de la valve 20 de son siège 22 par l'intermédiaire du poussoir 44, ouvrant ainsi l'alimentation en air comprimé. La pression d'air comprimé est communiquée à la chambre 16, puis à la chambre 48 par l'intermédiaire du circuit déjà cité (non représenté). Le mouvement du piston 42 vers la membrane 24 est limité par une butée 54.

Dans la chambre de travail de l'assistance pneumatique 48, la pression pneumatique ainsi que la pression hydraulique dans l'alésage 28 fait déplacer la paroi mobile 50 qui entraîne le piston 40, la tige de sortie 46 et donc déplace le levier de commande de l'embrayage qui lui est associé.

Lorsque la pédale d'embrayage est relâchée, la pression décroît dans le maître-cylindre 2, donc également dans les chambres de pression hydraulique 36 et 38 de l'alésage 28 du servomoteur. La pression différentielle qui s'exerce sur chaque piston les sollicite dans un mouvement de rapprochement vers la butée 32, le retour du piston 42 provoquant la fermeture de la valve d'alimentation en air comprimé. L'air comprimé contenu après fermeture de la valve dans la chambre d'alimentation 16, la chambre de travail 48 et le conduit que relie ces deux chambres, est évacué par l'orifice 25 par l'intermédiaire de l'alésage de la tige de clapet de la valve 20, laquelle tige est montée, comme on peut le voir sur la figure 1, séparable de la tête de clapet.

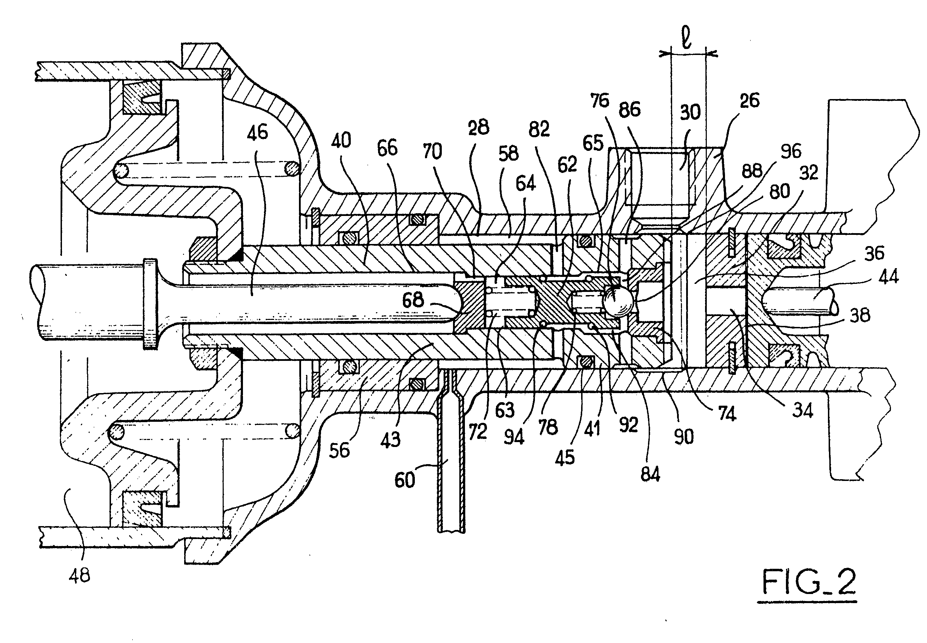

La figure 2 représente le dispositif de l'invention, permettant à la fois une commande parfaitement synchronisée du système de verrouillage/déverrouillage de la boîte de vitesses et de l'embrayage ainsi que la surveillance de l'usure du matériau de friction dudit embrayage.

Le dispositif de l'invention est incorporé dans le piston du servomoteur de commande hydropneumatique d'embrayage qui actionne la tige de commande d'embrayage.

Sur la figure 2, on a représenté le servomoteur hydraulique à assistance pneumatique en position de repos, l'embrayage non représenté étant pourvu d'un matériau de friction neuf sans aucune usure.

Le piston 40 comporte à son extrémité libre une première section 41 montée coulissante dans l'alésage 28, et une deuxième section 43, de diamètre légèrement inférieur au diamètre de l'alésage 28, coulissant dans un palier cylindrique 56 formant cloison monté fixe dans un alésage du boîtier 26. L'espace annulaire défini entre l'alésage 28, le diamètre extérieur de la deuxième section 43 du piston 40, le palier 56 et le ressaut formé sur le piston 40 entre la première et la seconde sections, constitue une chambre annexe de pression hydraulique 58 reliée par le conduit extérieur 60 au maître-cylindre du système de verrouillage de la boîte de vitesses (non représentée). L'étanchéité entre les chambres 58 et 36 au niveau de l'alésage 28 est assuré par un joint 45.

Le piston 40 comporte un alésage interne sur toute sa longueur divisé en deux parties d'alésage 64 et 66 séparées par une douille 68 venant en butée contre un ressaut formé à la jonction des deux parties d'alésage. La douille 68 porte une rainure 70 constituant un orifice de compensation dont le rôle apparaîtra plus loin dans la description du fonctionnement.

La partie d'alésage 66 reçoit une extrémité de la tige de sortie 46 qui vient en butée contre la douille 68.

La partie d'alésage 64 reçoit un plongeur 62, des moyens élastiques constitués par un ressort 72 étant prévus entre la douille 68 et le plongeur 62 pour appliquer le plongeur contre un manchon 74 engagé dans la face frontale du piston. Le plongeur 62 comporte un alésage borgne pour le logement d'une bille 76, d'un ressort 78 appliquant la bille contre l'embouchure d'un orifice 80 du manchon 74.

Le plongeur 62 comporte dans sa partie intermédiaire médiane une légère réduction de section par rapport aux sections égales de ses deux extrémités. Cette partie médiane, de section légèrement réduite, est délimitée axialement de part et d'autre par deux rainures annulaires recevant deux anneaux d'étanchéité 92 et 94.

La partie d'alésage 64 comprend une première section 63 dans laquelle vient coulisser la tête du plongeur 62 situé du côté de la tige de sortie 46 et une seconde section 65 de diamètre légèrement plus grand qui constitue autour du plongeur 62 une chambre annulaire 84 laquelle se prolonge dans la première section de l'alésage 64 grâce à la réduction de la section du plongeur dans sa partie médiane.

Cette chambre annulaire 84 communique avec la chambre annexe 58 comprise entre le piston 40 et le boîtier 26 par un ou plusieurs orifices radiaux 82.

D'autre part, la chambre annulaire 84 communique avec l'orifice d'amenée du fluide hydraulique 30 par l'intermédiaire de perçages radiaux 86 et d'une large gorge annulaire 90 de faible profondeur pratiquée dans l'alésage 28 au niveau de l'orifice d'amenée du fluide hydraulique 30. Enfin, des passages 88 existant à l'extrémité du plongeur 62 relient la chambre annulaire 84 avec la bille 76 de la valve dans un but qui sera expliqué ci-après avec la description du fonctionnement du dispositif de l'invention.

En position de repos, le piston 40 est dans la position représentée sur la figure 2, son extrémité libre 41 se trouvant à une distance "1" de la butée axiale 32. Cette distance "1" est choisie égale à l'usure maximum que l'on tolère sur le matériau de friction.

Dans cette position de repos, le système de verrouillage/déverrouillage de la boîte de vitesses est en position de verrouillage. Ce système de verrouillage/déverrouillage non représenté est un système de type classique dans lequel le déverrouillage est obtenu sous l'action d'une pression engendrée dans la chambre de pression d'un maître-cylindre.

Lorsque l'on actionne la pédale d'embrayage 6, une pression hydraulique est communiquée aux chambres 36 et 38 par l'orifice d'amenée du fluide 30. Le plongeur 62 est soumis, d'une part, à la pression atmosphérique sur sa face située près de la tige de sortie 46 du dispositif par l'intermédiaire de la rainure axiale 70 de la douille 68, et d'autre part à la pression hydraulique de commande communiquée par l'orifice 30, la gorge 90, les orifices radiaux 86. Sous l'influence de la pression différentielle résultante, le plongeur 62 se déplace contre l'action du ressort 72 relativement par rapport au piston 40 dans le sens d'un rapprochement vers la douille 68. L'anneau d'étanchéité 92 vient s'engager de façon étanche dans la section 63 de l'alésage 64 et fermer la communication entre l'orifice d'amenée du fluide 30 et le conduit extérieur 60 reliant le servomoteur 8 au système de verrouillage/déverrouillage de la boîte de vitesses.

Le servomoteur d'embrayage à assistance pneumatique et le système de verrouillage/déverrouillage de la boîte de vitesses sont dimensionnés de telle sorte qu'au moment où la pression atteint la pression de fermeture de la communication entre l'orifice 30 et le conduit 60, ces deux dispositifs soient encore en position de repos, c'est-à-dire que le servomoteur ne déplace pas encore la tige de sortie 46 et le système de verrouillage/déverrouillage de la boîte de vitesses est encore en position de verrouillage sous l'influence du ressort de réaction de ce système qui contrebalance la pression dans le système.

Lorsque la pression hydraulique augmente au-delà de cette pression de fermeture, le servomoteur commence à agir et déplace le piston hydropneumatique 40 vers la gauche, si l'on considère le dessin de la figure 2, sous l'action double de la pression hydraulique et de la pression pneumatique.

Le déplacement du piston hydropneumatique 40 entraîne la compression du fluide contenu dans la chambre annexe 58 et son écoulement sous pression par le conduit 60 vers le système de verrouillage/déverrouillage de la boîte de vitesses non représenté. La quantité de fluide pompé vers le système de verrouillage/déverrouillage à partir de la chambre annexe 58 dépend de la course du piston 40. Si cette course est insuffisante pour effectuer le débrayage, la quantité de fluide fournie au système de verrouillage/déverrouillage sera également insuffisante pour provoquer le déverrouillage de la boîte de vitesses. De cette façon, un parfait synchronisme est assuré entre l'actionnement de l'embrayage et l'actionnement de la boîte de vitesses.

Quelle que soit la valeur de la pression régnant dans la chambre annexe 58, au-delà de la pression de fermeture qui engage l'anneau d'étanchéité 92 dans l'alésage 64, le plongeur 62 reste immobile axialement par rapport au piston 40 parce que la pression de la chambre annexe 58, qui s'exerce dans l'espace compris délimité par les anneaux d'étanchéité 92, 94, entre la surface extérieure de la partie médiane de section légèrement réduite du plongeur 62 et l'alésage 64 par l'intermédiaire des orifices de communication 82, agit sur des surfaces égales de part et d'autre de ladite partie médiane du plongeur 62.

Lorsque la pédale d'embrayage est relâchée, le piston 40 revient dans la position représentée sur la figure 2. Au cours de ce mouvement de retour, la chute de la pression hydraulique agissant sur le plongeur 62 permet le retour du plongeur en position représentée sur la figure 2 sous l'action du ressort 72. La communication est de nouveau établie entre l'orifice d'amenée du fluide 30 et le conduit 60; la pression dans la chambre annexe 58 est alors la pression de repos du système de commande hydraulique permettant un verrouillage de la boîte de vitesses.

Après une longue utilisation de l'embrayage, il se produit évidemment une usure des garnitures de friction, la position de repos de la tige de sortie 46 du servomoteur, et donc la position de repos du piston 40, se trouve déplacée vers la butée 32, c'est-à-dire vers la partie droite du dessin, si l'on considère la figure 2. Ce déplacement, causé par l'usure des garnitures de friction de l'embrayage correspond à l'augmentation de la course du plateau d'embrayage dont l'épaisseur est réduite par ladite usure.

La position de repos du piston 40 de déplace avec l'usure des garnitures de friction dans le sens indiqué précédemment jusqu'au moment où l'extrémité du piston 40 vient obstruer la section de l'alésage 28 située immédiatement après la gorge annulaire 90 au niveau du ressaut 96. La communication est alors considérablement réduite entre l'orifice d'amenée du fluide hydraulique 30 et l'orifice 34 qui communique avec la chambre 38 où se développe la pression de commande de la valve d'ouverture de l'alimentation en air comprimé. Cette restriction du mouvement de fluide retarde le fonctionnement de l'assistance pneumatique et durcit fortement le mouvement de la pédale d'embrayage.

Ce durcissement initial de la pédale informe l'utilisateur du fait que les garnitures de friction de l'embrayage ont atteint une usure critique et que ces garnitures de friction doivent être remplacées. Ce durcissement n'empêche pas toutefois de faire encore un court usage de l'embrayage avant une détérioration totale des garnitures de friction et le patinage de l'embrayage.

La bille 76 appliquée contre le manchon 74 par le ressort 78 agit comme une soupape d'échappement, empêchant le ralentissement du mouvement du piston à la fin de sa course de retour en position de repos lorsque les conditions de signalement d'une usure critique des garnitures de friction sont réunies. Dans ces conditions, le fluide comprimé emprisonné entre la tête du piston 40 et la partie de l'alésage 28 située après le ressaut 96 vers la douille 32 écarte la bille 76 de son siège sur le manchon 74 et reflue librement vers l'orifice d'amenée du fluide 30.

Au fur et à mesure de l'accroissement de l'usure des garnitures de friction de l'embrayage, la position de repos du piston 40 se déplacera vers la droite de la figure 2, dans son alésage 28. Or cette variation de la position de repos du piston 40 ou position initiale n'influencera pas la course dudit piston qui restera inchangée ni ne gênera la commande hydraulique du système de verrouillage de la boîte de vitesses. En conséquence, la synchronisation de la commande du système de verrouillage de la boîte de vitesses avec celle de l'embrayage restera parfaite.

Lorsque l'usure des garnitures de l'embrayage atteint une valeur critique, le bord de la face d'extrémité du piston 40 vient recouvrir le ressaut 96 existant au bord de la gorge annulaire 90 prévue dans l'alésage 28 et le passage de fluide est freiné entre le maître-cylindre et le piston qui commande l'assistance pneumatique. De l'absence momentanée de cette dernière résulte le durcissement de pédale au début du processus de débrayage lequel informe le conducteur de l'usure des garnitures.

## Revendications

1. Dispositif de commande hydropneumatique synchronisée d'embrayage et de verrouillage de boîte de vitesses pour véhicule automobile, comportant un vérin hydraulique dont le piston (40) est assisté par un moteur pneumatique (48) et un maître-cylindre (2) qui alimente ledit vérin en fluide hydraulique et contrôle la valve d'alimentation (20) en air comprimé dudit moteur (48), caractérisé en ce que la chambre de commande (36) dudit vérin est connectée par ailleurs au circuit hydraulique (60) du dispositif de verrouillage/déverrouillage de la boîte de vitesses du véhicule, l'alimentation dudit circuit (60) de boîte de vitesses étant effectuée à travers une valve (62) montée dans le piston (40), qui, au repos, livre passage au fluide hydraulique dans une chambre annexe (58) délimitée par la surface externe dudit piston (40), par une cloison (56) à travers laquelle coulisse ledit piston, et par un épaulement (41) prévu à l'extrémité libre du piston et coulissant avec étanchéité dans un alésage (28) dudit vérin, l'admission du fluide hydraulique du maître-cylindre ayant pour effet dans un premier temps de fermer ladite valve (62) interrompant ainsi l'admission de fluide dans ladite chambre annexe (58), puis de provoquer le déplacement du piston (40) sous l'action de la pression hydraulique avec déclenchement de l'assistance pneumatique ce qui provoque la réduction du volume de ladite chambre annexe (58) et le transfert du fluide hydraulique contenu dans celle-ci vers le dispositif de verrouillage/déverrouillage de la boîte de vitesses qui se trouve déverrouillée en synchronisme avec le déplacement de la tige de commande (46) de l'embrayage.

2. Dispositif de commande hydropneumatique selon la revendication 1, caractérisé en ce que la valve (62) montée dans le piston (40) consiste en un plongeur (62) coulissant dans un alésage (64) prévu dans ce dernier, dont une face est soumise à la pression atmosphérique et à l'action d'un ressort de compression (72) qui sollicite le plongeur (62) vers une butée (74, 76) et dont l'autre face est soumise à l'action du fluide provenant du maître-cylindre, ledit plongeur (62) comportant une portion centrale de plus petit diamètre reliée à ladite chambre annexe (58) par des passages (82) sensiblement radiaux prévus dans le piston (40) et par une portion (65) de plus grand diamètre de l'alésage (64) où coulisse ledit plongeur (62) avec l'admission (30) de fluide du maître-cylindre, de sorte que lors de l'établissement de la pression ledit plongeur (62) se déplace à l'encontre dudit ressort de compression (72) et vienne obturer le passage entre l'alésage (64) dans lequel il coulisse et ladite portion de plus grand diamètre (65) de ce même alésage, enfermant ainsi le fluide dans ladite chambre annexe (58).

3. Dispositif de commande hydropneumatique selon la revendication 2, caractérisé en ce que la butée (74, 76) du plongeur consiste en une douille (74) montée dans la face d'extrémité du piston (40) et associée à une bille (76) montée avec un ressort de compression (78) dans un perçage borgne dudit plongeur (62), des passages sensiblement radiaux (86) reliant une gorge annulaire prévue dans la tête (41) du piston et débouchant vers la partie de plus grand diamètre (65) de l'alésage (64) où coulisse le plongeur (62), la bille (76) se décollant de son siège (80) lors de l'arrivée du piston (40) en bout de course rétractée.

4. Dispositif de commande hydropneumatique selon la revendication 3, caractérisé en ce que l'alésage (28) dans lequel coulisse la tête (41) du piston du vérin hydraulique comporte une gorge annulaire (90) dans laquelle débouche la tubulure d'admission (30) de fluide provenant du maître-cylindre (2), ladite gorge (90) étant disposée à une distance telle de la position de fin de course de la face du piston (40) que lorsque les garnitures d'embrayage sont presque usées, l'extrémité du piston (40) vienne au-delà de ladite gorge (90) et empêche le passage de fluide hydraulique vers la valve de commande (20) de l'assistance pneumatique, ce qui a pour effet d'augmenter l'effort-pédale.

**Claims**

1. Hydropneumatic control device for clutch engagement with synchronized gear box locking of an automotive vehicle, comprising a hydraulic jack whose piston (40) is assisted by a pneumatic motor (48) and a master cylinder (2) which supplies said jack with hydraulic fluid and controls the feed valve (20) of compressed air towards said motor (48), characterized in that the control chamber (36) of said jack is also connected to the hydraulic circuit (60) of the locking/unlocking mechanism of the gearbox, the supply of said circuit (60) being effected through a valve (62) mounted in the piston (40), which, at rest, permits a free passage of hydraulic fluid towards a secondary chamber (58) bounded by the external surface of said piston (40), by a partition (56) through which slides the piston, and by a shoulder (41) provided at the free end of the piston, which shoulder is slidably and tightly received in a bore (28) of said jack, the admission of hydraulic fluid from the master cylinder provoking in a first step the closure of said valve (62) thus blocking the fluid flow towards said secondary chamber (58) and then, in a second step, the displacement of the piston (40) under the bias of the hydraulic pressure, together with the triggering of the pneumatic assistance, which results in a reduction in the volume of said secondary chamber (58) and the transfer of the fluid contained therein towards the locking/unlocking mechanism of the gearbox which is thus unlocked in synchronism with the displacement of the control rod (46) of the gearbox.

2. Hydropneumatic control device according to Claim 1, characterized in that the valve (62) mounted in the piston (40) is comprised of a spool (62) slidably received in a bore (64) of the piston, one face of said spool being subjected to atmospheric pressure and to the bias of a coil spring (72) which urges the spool (62) towards a stop (74, 76) and the other face of said spool being subjected to the hydraulic pressure of the fluid supplied by the master cylinder, said spool (62) comprising a central portion of reduced diameter, connected to said secondary chamber (58) by passages (82) extending substantially radially through said piston (40), and to the fluid inlet (30) from the master cylinder by an enlarged portion (65) of the bore (64) in which slides the spool (60), whereby upon pressure rise said spool (62) is displaced against said coil spring (72) and blocks the passage between the bore (64) and the enlarged portion (65) of same, thus trapping the fluid in said secondary chamber (58).

3. Hydropneumatic control device according to Claim 2, characterized in that said stop (74, 76) of the spool comprises a sleeve (74) mounted in the end face of the piston (40) and associated with a ball (76) received with a spring (78) in a blind bore of said spool (62), substantially radial apertures (86) connecting an annular groove provided in the piston head (41) and opening into the enlarged portion (65) of the bore (64) in which slides the spool (62), the ball (76) lifting off its seat (80) at the end of the return stroke of the piston (40).

4. Hydropneumatic control device according to Claim 3, characterized in that the bore (28) in which slides the head (41) of the piston comprises an annular groove (90) in which opens the fluid inlet (30) from the master cylinder (2), said groove (90) being located at a distance from the face of the piston (40) at its rest position such that when the clutch lining are almost worn, the end of the piston (40) comes beyond said groove (90) and hinders the passage of hydraulic fluid towards the control valve (20) of the pneumatic assistance which results in an increase in the pedal reaction.

**Patentansprüche**

1. Hydropneumatische Vorrichtung zur synchronisierten Betätigung der Kupplung und der Getriebeverriegelung eines Kraftfahrzeuges, mit einem hydraulischen Arbeitszylinder, dessen Kolben (40) von einem Druckluftmotor (48) unterstützt wird, und mit einem Hauptzylinder (2), über welchen der hydraulische Arbeitszylinder mit hydraulischem Arbeitsmittel versorgt wird und durch welchen ein Druckluft-Speiseventil (20) für den Druckluftmotor (48) gesteuert wird, dadurch gekennzeichnet, daß die Arbeitskammer (36) des Arbeitszylinders zusätzlich mit dem Hydraulikkreis (60) der Einrichtung zum Verriegeln und Entriegeln des Schaltgetriebes des Fahrzeugs verbunden ist, daß die Versorgung dieses Hydraulikkreises (60) des Schaltgetriebes über ein Ventil (62) erfolgt, welches im Kolben (40) angeordnet ist, welches im Ruhezustand einen Durchgang für hydraulisches Arbeitsmittel zu einer benachbarten Kammer (58) freigibt, die ihrerseits begrenzt ist durch die außenliegende Oberfläche des Kolbens (40), durch eine Trennwand (56), in welcher der Kolben (40) verschiebbar geführt ist und durch eine Schulter (41), die beim freien Ende des Kolbens vorgesehen ist und strömungsmitteldicht in der Bohrung (28) des Arbeitszylinders verschiebbar ist, wobei die Zufuhr von hydraulischem Arbeitsmittel vom Hauptzylinder zunächst innerhalb einer ersten Zeitspanne zu einem Schließen des besagten Ventiles (62) führt, wodurch die Zufuhr von Arbeitsmittel zu der benachbarten Kammer (58) unterbrochen wird, worauf dann unter gleichzeitiger Auslösung der Druckluft-Servounterstützung der Kolben (40) durch den hydraulischen Druck in Bewegung gesetzt wird, wodurch das Volumen der benachbarten Kammer (58) vermindert wird und das in ihr befindliche hydraulische Arbeitsmittel zu der Einrichtung zum Verriegeln und Entriegeln des Schaltgetriebes gedrückt wird, so daß letzteres synchron zur Bewegung der Kupplungs-Betätigungsstange (46) entriegelt wird.

2. Vorrichtung nach Anspruch 1, dadurch gekennzeichnet, daß das in dem Kolben (40) angeordnete Ventil (62) einen Tauchkolben (62) aufweist, der verschiebbar in einer im Kolben (40) vorgesehenen Bohrung (64) angeordnet ist, dessen eine Stirnfläche mit atmosphärischem Druck und der Kraft einer Druckfeder (72) beaufschlagt ist, durch welche der Tauchkolben (62) gegen einen Anschlag (74, 76) vorgespannt ist, und dessen andere Stirnfläche mit dem Druck des vom Hauptzylinder bereitgestellten Arbeitsmittels beaufschlagt ist, wobei der Tauchkolben (62) einen zentralen Abschnitt mit kleinerem Durchmesser aufweist, der mit der benachbarten Kammer (58) über im Kolben (40) ausgebildete, im wesentlichen radial verlaufende Kanäle (82) sowie einen größeren Durchmesser aufweisenden Abschnitt (65) der Bohrung (64) verbunden ist, in welcher der Tauchkolben (62) verschiebbar ist und in welche die Einlaßöffnung (30) für vom Hauptzylinder bereitgestelltes Arbeitsmittel einmündet, so daß sich der Tauchkolben (62) beim Aufbau eines Druckes entgegen der Kraft der Druckfeder (72) verlagert und den Durchgang zwischen der Bohrung (64), in welcher er verschiebbar ist, und dem größeren Durchmesser aufweisenden Abschnitt (65) dieser Bohrung verschließt, wodurch das in der benachbarten Kammer (58) befindliche hydraulische Arbeitsmittel eingeschlossen wird.

3. Vorrichtung nach Anspruch 2, dadurch gekennzeichnet, daß der Anschlag (74, 76) für den Tauchkolben durch eine Büchse (74) gebildet ist, die in der Endfläche des Kolbens (40) angeordnet ist und der eine Kugel (76) zugeordnet ist, die zusammen mit einer Druckfeder (78) in einer Sackbohrung des Tauchkolbens (62) angeordnet ist, wobei im wesentlichen radial verlaufende Kanäle (86) eine Verbindung zu einer Ringnut herstellen, die in dem Kopf (41) des Kolbens ausgebildet ist und die in den größeren Durchmesser aufweisenden Abschnitt (65) der Bohrung (64) einmündet, in welcher der Tauchkolben (62) verschiebbar ist, wobei die Kugel (76) von ihren Sitz (80) abgehoben wird, wenn der Kolben (40) am Ende seines Rückhubes anlangt.

4. Vorrichtung nach Anspruch 3, dadurch gekennzeichnet, daß die Bohrung (28), in welcher der Kopf (41) des Kolbens des hydraulischen Arbeitszylinders verschiebbar ist, eine Ringnut (90) aufweist, in welche ein Einlaßrohr (30) für vom Hauptzylinder (2) bereitgestelltes Arbeitsmittel einmündet, wobei diese Nut (90) um eine solche Strecke von der Hub-Endstellung der Stirnfläche des Kolbens (40) entfernt ist, daß dann, wenn die Beläge der Kupplung fast abgenützt sind, das Ende des Kolbens (40) jenseits dieser Nut (90) steht und verhindert, daß hydraulisches Arbeitsmittel zu dem Speiseventil (20) für die Druckluft-Servounterstützung gelangen kann, wodurch die Betätigungskraft für das Kupplungspedal erhöht wird.

0 004 513

FIG_1

FIG_2

0 004 513